# DEMANDE DE BREVET EUROPEEN

(11) **EP 0 811 465 A1**
(43) Date de publication de la demande: **10.12.1997**
(21) Numéro de dépôt: 97401228.8
(22) Date de dépôt: 03.06.1997
(51) Int. Cl.: B25B 1/22, B25B 5/00, B23Q 16/04

(54) **Dispositif à poste fixe de soutien orientable d'un matériel pesant**

(30) Priorité: 03.06.1996 FR 9606806
(71) Demandeur: MECANIQUE ENERGETIQUE, F-77620 Egreville (FR)
(72) Inventeur: Lambert, Patrick, 45320 Courtenay (FR)
(74) Mandataire: Robert, Jean-Pierre

(57) **Abrégé**

Dispositif de soutien orientable d'un matériel pesant (6) généralement cylindrique, comportant un étau avec une mâchoire fixe (4) et une mâchoire mobile (5) par rapport à la mâchoire fixe. Selon l'invention, le dispositif comprend un socle (2) portant un axe (9) d'articulation pour un support longitudinal (3) parallèle à l'axe d'articulation (9) et monté pivotant sur le socle par l'une de ses extrémités autour de cet axe tandis que son autre extrémité s'étend en porte-à-faux au-delà du socle (2) et est équipée de la mâchoire fixe (4), un verrou (24) de blocage étant prévu entre le socle (2) et le support (3) pour immobiliser ce dernier par rapport au socle dans plusieurs positions relatives déterminées autour de l'axe (9) d'articulation.

## Description

La présente invention concerne un outillage d'atelier pour soutenir de manière orientable un matériel lourd sur lequel il faut intervenir. Plus précisément il s'agit d'une sorte d'étau pour soutenir une jambe de force de véhicule automobile lorsque celle-ci a été déposée afin d'y intervenir aisément. Une telle jambe de force peut être ou non porteuse d'un compresseur de ressort, appareil qu'il a fallu utiliser pour la déposer, l'étau pouvant serrer l'ensemble par l'intermédiaire du compresseur.

Ce type de matériel, lorsqu'il est déposé peut être manipulé par un ouvrier pour le transporter. En revanche lorsqu'il s'agit d'intervenir sur ce matériel, il convient de le maintenir fermement et ce dans plusieurs positions pour faciliter l'accès de l'ouvrier à telle ou telle section de ce matériel.

A cet effet l'invention a donc pour objet un dispositif de soutien orientable d'un matériel pesant, généralement cylindrique, comportant un étau avec une mâchoire fixe et une mâchoire mobile par rapport à la mâchoire fixe. Selon l'invention, ce dispositif comprend un socle portant un axe d'articulation pour un support longitudinal, parallèle à l'axe d'articulation et monté pivotant sur le socle par l'une de ses extrémités autour de cet axe tandis que son autre extrémité s'étend en porte-à-faux au-delà du socle et est équipée de la mâchoire fixe ; un verrou de blocage est prévu entre le socle et le support pour immobiliser le support par rapport au socle dans plusieurs positions relatives déterminées autour de l'axe d'articulation.

En d'autres termes, l'étau est tel que le socle étant fixé à un établi, au bord de ce dernier, le support s'étend au-dessus du vide et peut pivoter par rapport au socle autour d'un axe qui est parallèle à la surface supérieure de l'établi si bien que l'objet peut être incliné dans un plan vertical. Il peut d'ailleurs être avantageux de disposer le dispositif de l'invention au-dessus d'un coin d'établi, le support s'étendant par exemple le long de la bissectrice du coin de cet établi, de sorte que l'espace pour accéder autour du matériel porté par le support est très dégagé.

Dans un mode particulier de réalisation de l'invention, le socle comporte une partie polyédrique au-delà de l'extrémité articulée du support dont chacune des faces est sensiblement parallèle à l'axe d'articulation, l'extrémité arrière du support étant équipée d'un levier pendulaire suspendu par l'une de ses extrémités autour d'un axe orthogonal à l'axe d'articulation et présentant à son autre extrémité une surface plane parallèle à cet axe de suspension, susceptible de prendre appui successivement sur chacune des surfaces de la partie polyédrique du socle, chaque surface du socle correspondant à une position d'inclinaison déterminée du support par rapport au socle. Ainsi, lorsque l'axe de suspension du levier est parallèle à l'une des surfaces de l'extrémité polyédrique du socle, le levier peut s'intercaler entre cette surface et cet axe et constitue alors une came de verrouillage immobilisant le support par rapport au socle. La manipulation de cette came est très aisée et peut être obtenue à l'aide d'une seule main pendant que l'autre main de l'opérateur retient l'appareil soutenu par le dispositif et le guide vers telle ou telle inclinaison qu'il souhaite lui donner.

D'autres caractéristiques et avantages ressortiront de la description d'un mode de réalisation de l'invention donné ci-après à titre indicatif. On y trouvera également la description d'un mode particulier de réalisation de la mâchoire mobile de cet étau.

Il sera fait référence aux dessins annexés parmi lesquels :
- la figure 1 est une vue générale en élévation du dispositif selon l'invention,
- la figure 2 est une vue en bout de ce dispositif.

Le dispositif représenté aux figures comporte, sur la surface 1 d'un établi auquel il est fixé, un socle 2 et un support 3 qui comporte une mâchoire fixe 4 et une mâchoire mobile 5 pour la fixation d'un objet sensiblement cylindrique 6. Le socle 2 est ici constitué par une chape possédant deux branches 7 et 8 et un axe 9 les reliant. L'axe 9 est sensiblement parallèle à la surface 1 de l'établi auquel sont fixées les deux branches 7 et 8. L'axe 9 est de préférence solidaire des deux branches 7 et 8 de manière à constituer un tourillon pour le support 3.

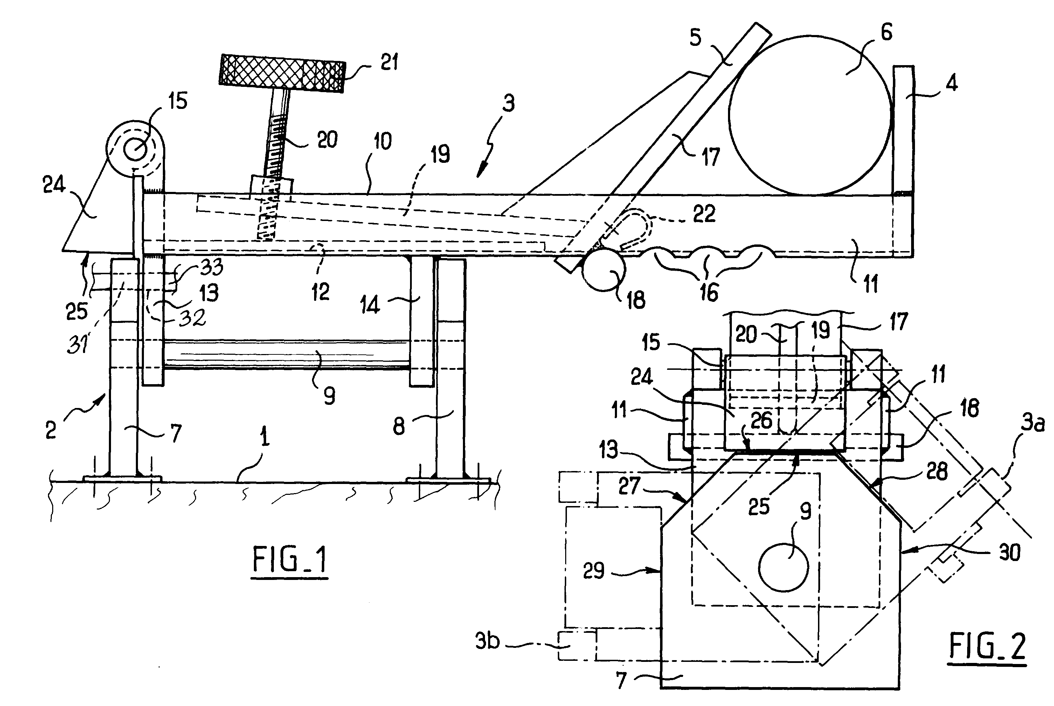

Le support 3 comporte une poutre 10 horizontale formée par exemple par deux cornières telles celles 11 visibles sur la figure 1, parallèles, réunies sur une partie de leur longueur, celle voisine du socle 2, par une plaque 12 formant semelle. Sous la plaque 12, la poutre 10 porte deux branches 13 et 14 qui sont montées articulées sur l'axe 9. La branche 13 forme une paroi d'extrémité de la poutre 10 et porte en saillie au-dessus de cette poutre un axe de suspension 15.

Dans la partie de la poutre 10 extérieure à la semelle 12 et donc en porte-à-faux par rapport au socle 2, les deux cornières 11 sont reliées à leur extrémité par une plaque disposée entre elles qui constitue la mâchoire fixe 4. Le bord inférieur de chaque cornière 11 est creusé d'une série d'encoches 16.

La mâchoire mobile 5 comporte une plaque 17 disposée entre les cornières 11 de la poutre 10, cette plaque étant pourvue à son extrémité inférieure d'un barreau 18 qui est plus large que la poutre 10 de manière à déborder de chaque côté des cornières 11. A la plaque 17 est associé un levier 19 qui s'étend entre les cornières 10 en direction de l'arrière et le support c'est-à-dire au-dessus de la plaque 12, ce levier 19 étant pourvu à son extrémité d'une vis 20 possédant une tête de manoeuvre 21 qui permet de faire varier la position du levier 19 par rapport à la semelle 12. Un ressort 22 est disposé entre la plaque 17 et les rebords intérieurs des cornières 11 de manière à forcer élastiquement le contact du barreau 18 avec le bord inférieur des cornières 11 donc à loger ce barreau 18 dans les encoches 16. On notera enfin la présence d'un gousset de renfort 23 entre le levier 19 et la plaque 17.

En fonction du diamètre du corps 6 à supporter, on procède à un réglage grossier de la mâchoire 5 par rapport à la mâchoire 4 en manipulant l'ensemble au moyen de la tête moletée 21 de la vis 20 pour la faire glisser le long de la poutre 10. Cette approche grossière étant réalisée, le barreau 18 se trouve dans l'encoche 16 la plus appropriée et, en vissant la vis 20, on force le levier 19 à pivoter autour du barreau 18 entraînant ainsi le pivotement de la plaque 17 contre le corps 6 qui lui-même s'applique contre la mâchoire fixe 4.

A l'autre extrémité, le support 3 possède, suspendu à l'axe 15, un levier 24 qui possède, à l'extrémité opposée à celle de sa suspension à l'axe 15, une face 25 parallèle à cet axe.

Dans la position représentée à la figure 1, le levier 24, sous son propre poids, s'interpose entre la branche 7 du support 2 et l'axe 15. Cette branche 7 possède une surface supérieure polyédrique, c'est-à-dire comportant des facettes telles que 26, 27, 28, 29 et 30 comme représenté à la figure 2, ces facettes étant parallèles à l'axe 9.

Il existe donc en regard de chacune de ces facettes, une position du support 3 autour de l'axe 9, qui autorise au levier 24 de s'intercaler entre son axe de suspension 15 et la facette en question. Dans cette position, ce levier forme un verrou qui immobilise en rotation le support 3 par rapport au socle 2 autour de l'axe 9 et qui dont maintient le matériel 6 dans un degré d'inclinaison déterminé (une position horizontale en trait plein sur la figure 2, deux positions inclinées à 45° symétriques l'une de l'autre telles que 3a sur la figure 2, deux positions verticales symétriques l'une de l'autre telles que 3b sur la figure 2). La surface 25 du levier 24 qui déborde des surfaces portées par la branche 7 du socle 2, constitue également un moyen de préhension manuelle pour déverrouiller l'immobilisation du support 3 par rapport au socle 2, ce déverrouillage demandant bien entendu à l'opérateur de soulager le verrou 24 en soutenant le matériel 6. Sous l'effet de la gravité, on comprend de la figure 1 que le verrou 24 tend normalement à s'intercaler entre l'axe 15 et les surfaces 26, 27 et 28.

En alternative au verrou décrit ci-dessus ou en complément de celui-ci, il peut être prévu dans l'une 7 des branches du socle 2 une pluralité d'orifices 31 correspondant aux différentes inclinaisons possibles du support 3 autour de l'axe 9, au travers desquels on peut brocher la branche 7 du support 3 pourvue d'un orifice 32 pour la mise en place de cette broche ou goupille 33 de verrouillage.

L'invention constitue un support orientable pour un matériel pesant de fabrication extrêmement simple et surtout d'utilisation très pratique.

## Revendications

1. Dispositif de soutien orientable d'un matériel (6) généralement cylindrique, comportant un étau avec une mâchoire fixe (4) et une mâchoire mobile (5) par rapport à la mâchoire fixe, caractérisé en ce qu'il comprend un socle (2) portant un axe (9) d'articulation pour un support longitudinal (3) parallèle à l'axe d'articulation (9) et monté pivotant sur le socle par l'une de ses extrémités autour de cet axe tandis que son autre extrémité s'étend en porte-à-faux au-delà du socle (2) et est équipée de la mâchoire fixe (4), un verrou (24) de blocage étant prévu entre le socle (2) et le support (3) pour immobiliser ce dernier par rapport au socle dans plusieurs positions relatives déterminées autour de l'axe (9) d'articulation.

2. Dispositif selon la revendication 1, caractérisé en ce que le socle (2) comporte une partie (7) polyédrique au-delà de l'extrémité articulée du support (3) dont chacune des faces (26, 27, 28, 29, 30) est sensiblement parallèle à l'axe d'articulation (9), l'extrémité arrière du support (3) étant équipée d'un levier (24) suspendu par l'une de ses extrémités autour d'un axe (15) orthogonal à l'axe d'articulation (9) et présentant à son autre extrémité une surface plane (25) parallèle à cet axe de suspension (15) susceptible de prendre appui successivement sur chacune des surfaces (26 à 30) de la partie polyédrique (7) du socle (2).

3. Dispositif selon la revendication 2, caractérisé en ce que le levier (24) comporte une partie (25) pour sa manipulation manuelle autour de l'axe de sa suspension (15).

4. Dispositif selon la revendication 1, caractérisé en ce que le socle comporte un élément de bâti (7) perpendiculaire à l'axe d'articulation (9) tandis que le support longitudinal comporte un organe (13) parallèle à l'élément de bâti, le verrou étant constitué par une broche (23) parallèle à l'axe d'articulation (9) traversant l'élément et l'organe.

5. Dispositif selon l'une des revendications précédentes, caractérisé en ce que la mâchoire fixe (4) est formée par une plaque d'extrémité du support (3), perpendiculaire à deux montants (11) écartés l'un de l'autre entre lesquels est logée la mâchoire mobile (5).

6. Dispositif selon la revendication 5, caractérisé en ce que la mâchoire mobile (5) comporte une plaque (17) en regard de la mâchoire fixe (4), pourvue à sa base d'un barreau cylindrique (18) susceptible de coopérer avec chacune d'une série d'encoches (16) ménagées sur le bord inférieur de chaque montant (11), la plaque (17) étant solidaire d'un levier (19) qui s'étend entre les montants (11) et qui porte à son extrémité opposée à la plaque (17) une vis (20) formant vérin pour basculer la plaque (17) autour du barreau (18) logé dans une encoche (16).
